# EUROPEAN PATENT APPLICATION

(11) **EP 1 056 233 A2**
(43) Date of publication of application: **29.11.2000**
(21) Application number: 00830377.8
(22) Date of filing: 26.05.2000
(51) Int. Cl.: H04B 13/02

(54) **Improvement in underwater communications by means of coded pulses**

(30) Priority: 26.05.1999 IT BO990290
(71) Applicant: Bellini, Pierluigi, 40060 Pianoro (Bologna) (IT)
(72) Inventor: Bellini, Pierluigi, 40060 Pianoro (Bologna) (IT)
(74) Representative: Coppi, Cecilia

(57) **Abstract**

An improvement in the communication systems with digital ultrasounds, in air or water, between two pre-programmed devices with a numeric recognition key. Said system uses a single frequency that is characteristic of the devices, without a carrier frequency, to transmit data, commands or signals and without any physical link between the devices except for the water or air into which they are placed.

## Description

The invention relates to an improvement in underwater communication systems by means of coded pulses that are emitted by a surface transmitter connected to a piezoelectric transducer and that are received by a plunged receiver connected to a second piezoelectric transducer.

The communication systems now existing, especially those for underwater communication, are multi-frequency or they use amplitude modulation.

Multi-frequency systems use two or more frequencies emitted simultaneously or in a sequence to transit data or signals. These systems are very complex and expensive.

Modulation system, of vocal type, modulate the amplitude of a carrier frequency, continuous, in double band, or SSB (single side band), essentially just like a radio and are non suitable to transmit data or signal surely reliable.

Having to use transducers in continuous transmission, the power must be reduced of a 50/70%, or the transducer is damaged and doesn't work any longer after a very short time. In fact, ultrasonic transducers, to be used at their maximum working power, have to respect their duty-cycle, the ratio between working-time and silence, that varies from 5 to 10%, or the transducer will deteriorate quickly.

There are a few known systems of the type described at the beginning, where the transmission of data and signals is digital and that work using the piezoelectric transducers respecting their duty-cycle, but they have some inconveniences.

First, presently the communication uses a transmission frame that is not convenient from the point of view of the transmission's error-check. Second, such systems operate at the transducer's own resonance frequency, this implies that if the oscillators drift, the transmitter's one and the receiver's may operate at different frequencies. This may be due to variations of the environment's temperature at which the two units are operating, in fact, one can be completely submerged into water, and the other may be outside, or they could be at different depths or subject to different water currents. All of these factors can influence the temperature. Another inconveniency is in the fact that the activation of the clock is tuned when the first pulse is received. So, losses of synchronization and data may occour.

The object of the invention comprises a communication system of the first type described at the beginning, with which it is possible to correct the inconveniencies described before in a relatively cheap and simple way.

An other object of the invention relates also to an integrated transceiver unit that would allow to use the components that are common to the two functions.

All of this to permit the reciprocal transmission between two subjects plunged in the same medium: water or air, without cable connection, mono-directionally or bi-directionally.

Accomplishes the above objects through a communication system of the kind described at the beginning, realized in a way that a single transmission frequency is used, with discontinuous digital pulses, without any continuous transmission acting as a signal carrier.

In a convenient way, the transmission takes place with signals in the form of bits, where a low bit level is represented by the absence of signal, and the high level by the presence of signal.

The ratio between the transmission/silence time is tuned so that in a full clock time there is a 10% of time dedicated to the transmission and 90% is pause.

For instance a duty-cycle is chosen so that the transmission is carried for 1 ms, and it is followed by 9ms of pause.

As for another feature of the invention, the data or commands digitalized and coded are sent inside a transmission frame and always accompanied by the key-code preset in the transmitter and in the receiver.

A preferred execution form implies a transmission frame on 16 bit, of which 12 for the key and 4 for the code. The transmission frame is the set of bits from 8 to n that are sent from the transmitter towards the receiver and constitute an event that is repeated from 2 to n times to send data.

The transmission implies a protocol for which for any transmitted frame the preset key-code is sent unchanged, while the bits of code vary with each frame, corresponding to the information to be transmitted.

A further improvement implies that in this system the protocol is such that the first transmitted frame is not relevant from the point of view of the communication of data, but is a starting signal for the oscillator that drives the receiver's piezoelectric transducer's.

For this aim, the invention says that the first frame is compressed for what concerns the number of bit contained into it.

Such compression can be drastic limiting the number of bit of the first frame to 2 or 4 bit at high level.

According to the invention, in the communication system a transmission unit with means to generate three different signals is included, that is to say: a frequency generator of for instance 50KHz, a transmission pulse of 200 microsec and aninterval of 20 ms between a transmission pulse and the following. Such values are not to be intended in a limitative way, but can take any value following the specifications of the application.

The pulses emitted from the transmitter are sent by means of the piezoelectric transducer, thanks to a shift register pre-programmed with the specific key-code and the command code (the bit that bring the information) are of binary kind, where 1 is the pulse in the clock time and 0 is the absence of pulse in the clock time. Also the number of bit can be varied as needed.

This permits to transmit and receive data in ASCII code or other signals, commands or pictures without limitations, event at far distances depending on the power of the transmitter and on the physical characteristics of the transducer.

According to another feature of the invention, it is convenient to have a transmission frequency of the piuezoelectric transducer that can be, but not compulsorily, the resonance frequency, while the tuning of the receiver is done placing on the output of the receiver's piezoelectric transducer a signal amplifier that is selective for the transmission frequency, it is a so-called "matched amplifier".

Thanks to this, the receiving unit is not influenced by other transmission taking place with frequencies that are multiple or harmonics of the transmission's base frequency, and it is excited only by the transmitter's transmission frequency, thanks as said to the matched amplifier that is selective on the received frequencies for the amplified signal that it outputs.

A further feature of the invention says that the transmitter and receiver units are integrated in a single transceiver device that uses components common, integrating only the different stages for the execution of the different functions and having commuters to connect alternatively such stages.

Such commuters can be of two kinds: (1) manually or automatically activated following pre-programmed transmission/reception cycles or (2) automatically activated when a first frame with opportune codes for the activation of the commuters for the reception function of the transceiver unit to which a transmission is sent from another unit.

The improvement introduced make the communication system better so that it can be used not only when at least one of the units plunged in a liquid, but also when both units are not plunged.

The characteristics of the invention and the advantages coming from it will better result from the following description of some examples, not limitative, illustrated in the appended drwings in which
Figure 1 illustrates the diagram of a coded pulse relative to time (t) and to one clock interval.
Figure 2a illustrates the diagrams of the signals received relative to clock time, the extension of the received pulse (data) and the synchronization of the clock delayed of half a DATA time.
Figure 3 t illustrates he possible conformation of a 16 bit frame, of which 12 of key and 4 for the code and the corresponding decodification in the reception.
Figure 4 illustrates the block-scheme of a transceiver unit as for this invention.
Figure 5 illustrates the delay circuit associated with the receiver
Figure 6 illustrates the matched amplifier of the signals received by the receiver
Figures 7a and 7d illustrate an application example of the communication system according to the invention.

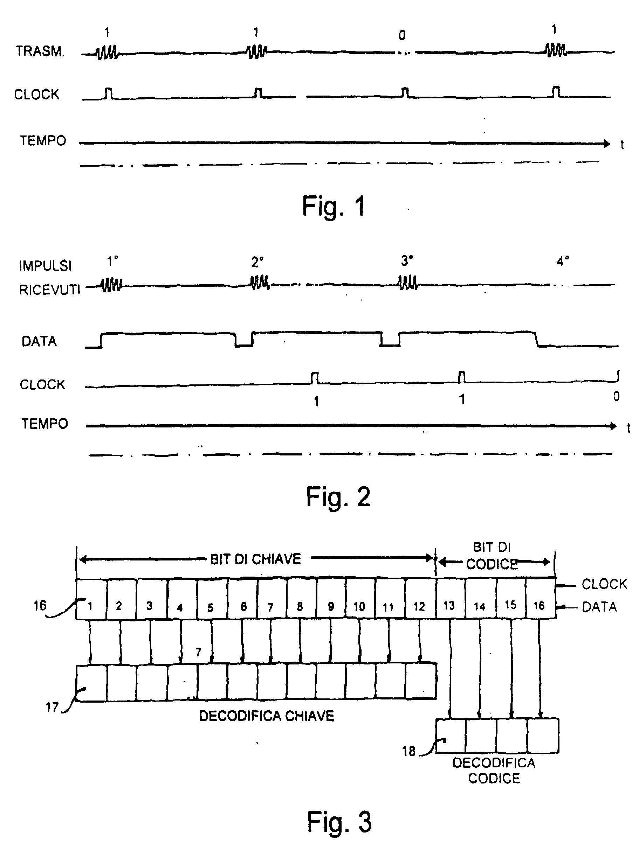

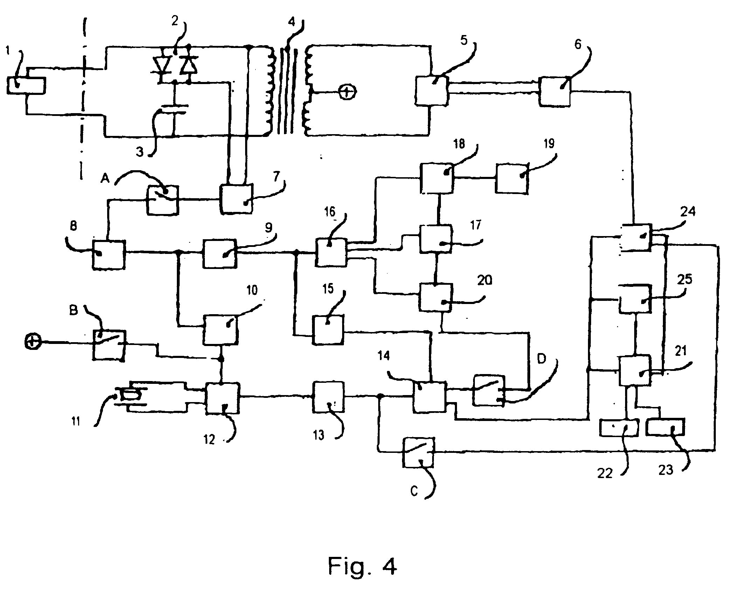

With reference to Figure 4, with 1 a piezoelectric transducer is indicated in which the output are connected to the secondary of transformer-elevator 4, in which the primary is connected to a power stage 5 and through it to a phase inverter 6 and a pulse sender 24.

To the secondary, in parallel with transducer 1, are placed the schottky diodes 2 and an accordance condenser 3 from which is taken the signal given to an matched amplifier 7, whose output is connected to a digitalizer 8 through the commuter A.

The digitalizer 8 then powers a non-retriggerable monostable 9 and a retriggerable monostable 10. The retriggerable monostable 10 drives an oscillator 12 to which is connected the quartz or resonator 11. A commuter b connects alternatively the power to the oscillator 12.

The output from the oscillator 12 is given to a frequency divider 13 that is connected to a clock generator 14 that is then connected to the pulse sender 24 and, though a commuter D, to a timer 20. The signal on the output of the non-retriggerable monostable 9 is given both to a counter 15 and to a SI-PO shift register, whose outputs are connected to a driver unit for a display or actuator or to a memory buffer 19, to a decoder 17 and to the timer 20 to which is connected though the commuter D also the clock generator 14 through the analog switch D.

The pulse sender 24 is connected to the phase inverter and receives the signals of the clock generator 14 and is also connected to a PI-SO shift register, to which also the signale generated from the clock generator 14 is given. The clock generator is alos connected to the parallel load counter 25, that is connected to the shift register 21.

The latter is connected to a key-programming unit 22 and to a data unit or a commuter of the analog switches B, C and D. The commuter C connects the pulse sender 24 with the output of the frequency divider 13 before the clock generator 14.

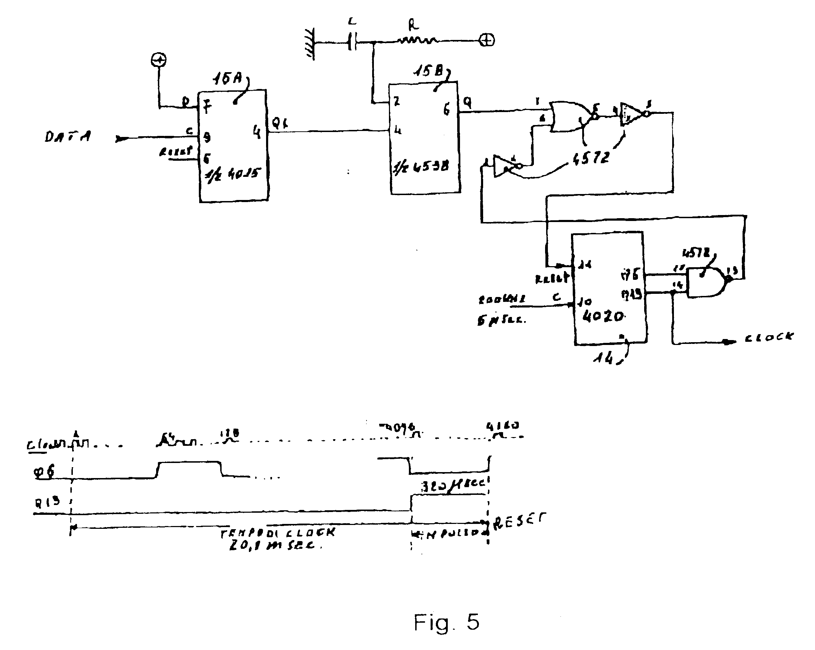

Figure 5 illustrates the delay circuit for the generation of the clock at the time the second pulse is received.

With 115a and 115B are respectively indicated a shift register and a monostable timer. When the communication begins, the register has all of its outputs at 0 and 1 reset at the end of every reception.

When the pulses arrive, its outputs are taken at a high level successively. The output Q3 is taken at high level with the rising front of the second received pulse. The monostable 115B has the function of a timer and for the time defined by the RC50 unit of half the data time, only for one time for the reception time sends a reset signal to the binary counter 14 that will start to generate the clock delayed for all of the reception time and to send it to the SI-PO shift register 16.

The execution form of Figure 4 presents a further improvement in the fact in this improved form transducers are used that do not need to have a specific resonance frequency, but that can transmit and receive at different frequencies.

For this reason, the receiving unit has a so-called "matched" amplifier, meaning it has a passing band or that reveals only a pre-established frequency that is the one at which the transmitter transmits.

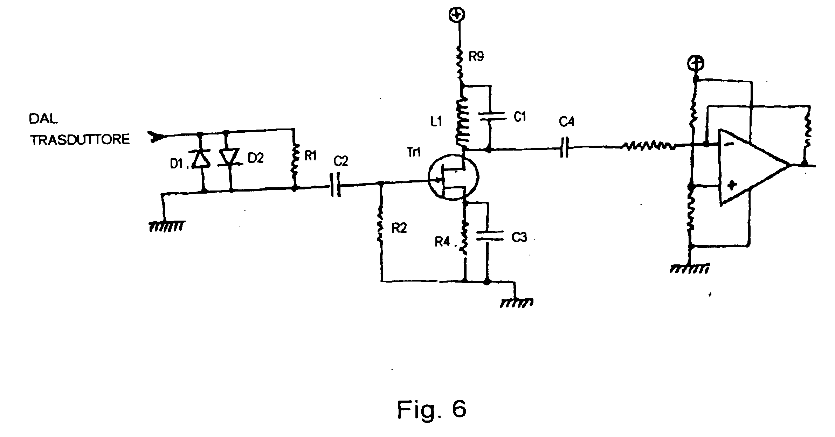

This improvement allows to avoid that the communication system might be influenced by pulses at frequencies multiple of the transmission's one, so called harmonics. A construction example is shown in Figure 6.

The operating modes of the example shown in Figure 4 are the following: the mechanical vibrations emitted from the transmitter are captured by piezoelectric transducer 1 and transformed in electrical pulses.

For instance, transducer 1 receives mechanical vibrations at 50 kHz and it transforms them in sinusoidal electrical waves at 50 kHz, with an amplitude proportional to the intensity of the mechanical signal.

The configuration of the analog switches A, B, C, D for the unit to work as a receiver is: A=closed, B=open, C=open, D=closed

The electrical pulses generated are captured by the schottky diodes and sent to he amplifier 7 matched on the known frequency.

The received pulses are then made digital in 8. The rising front from low level 0 to high level 1 of the digital pulses activates the monostable timers 9 and 10.

Timer 9 has the function of lengthening the received pulse's time, up to 90% of the clock time, sending it to the counter 15 and the register 16.

When the first pulse is received the timer 10 powers the oscillator 12 for half a frame time a re-generates this timing at every received pulse and if it will not receive valid pulses for the duration of half a frame the power is disconnected from the oscillator 12.

This oscillator 12 has the function of activating the quartz 11 and sends the generated frequency (e.g. 2 MHz) to the frequency divider 13 that generates two different frequencies: 200kHz and 50 kHz.

The 200 kHz frequency is sent to the clock generator 14. The 50 kHz frequency is used in the transmission mode and is sent to the pulse sender 24 in transmission mode.

The clock generator starts counting to generate the clock. When the second pulse is received the counter 15 generates a pulse of 9ms that is half the DATA time. This pulse resets the counter 14 that will start again to count and to generate the clock, with a delay of 9 ms from the reception of the pulses. This delay is needed to compensate possible shifts in the oscillating frequencies of the quartzes of the receiver and the transmitter. This situation is shown in Figure 2.

The received pulses (DATA) and the clock enter the shift register 16 and show on its outputs, towards the pre-programmed decoder 17. When the key is recognised, the unit may perform two kind of actions:
a) the timer 20 is activated to stop the clock on the shift register 16 for a specific time, for instance 2 or 3 sec, to activate the display 18 to show the received code or to send it to the actuator to which it is directed. b) the received data are sent to the memory buffer without blocking the clock on the shift register. This is done when a frame such as the one shown in Figure 1 is received.

In the transmission operation mode, the unit works as follows:
with the B switch closes the oscillator 12 is powered generation an action similar to to one described for the reception. The clock generated from the clock generator 14 is sento to the register 21, to the pulse sender 24 and to the parallel load counter 25.

This generates a pulse for the parallel load every n bit, where n is the length of the frame, that is to say the number of bit for each frame, and at the beginning of each frame loads the content of the key-programmer 22 and of the data input unit 23 (code or data) in parallel mode. The serial output of the shift register 21 is given to the pulse sender 24.

This combines the frequency transmission of the frequancy divider 13, the transmission time of the clock generator 14 and the validation of the sending from the register 21.

If the output of register 21 is high, meaning 1, the transmission frequancy is sent to the phase inverter for the sending time generated by the clock generator 14.

The phase inverter 6 amplifies and inverts the signal and in the output two signals are obtained: one in phase with the incoming one and one with a phase difference of 180°. These are sent to the power stage made of power transistors that activate the primary of the transformer-elevator 4. The secondary is connected to the piezoelectric transducer 1 in parallel with revelator diodes 2 and the accordance condenser 3. Being excited, the transducer will send in the medium into which it is plunged ultrasonic waves suitable to be captured by one or more transducers associated to one or more receiving or transceiver units.

Figure 3 illustrates a further characteristic of the communication system of this invention, concerning the structure of the transmission frame for the signal.

With transmission frame is intended the set of bit tgat are sent from the transmitter and from which an event repeated 2 or more times is reconstructed, to send data, commands or codes usable from the receiver. The example shown shows a frame of 16 bit, of which 12 for the key and 4 for the code.

This frame allows to send with the set of bit for the code always the bit for the key. This, any information or group of information sent is always accompanied by the key,

Thus, in a data transmission, the receiver can always verify the correctness of the transmission of the data checking the number of received keys and can then send a "correct reception" signal to the transmitter or a signal for the repetition of the message if it was not received correctly.

In a practical example, if the system is configured for receiving 128 chars, followed by a stop information, if checking the number of the keys after counting to 128 the stop is received, the "ok" signal is sent.

If the received keys are 127 or less or more, then the receiver will send an error message and will ask for the repetition of the message.

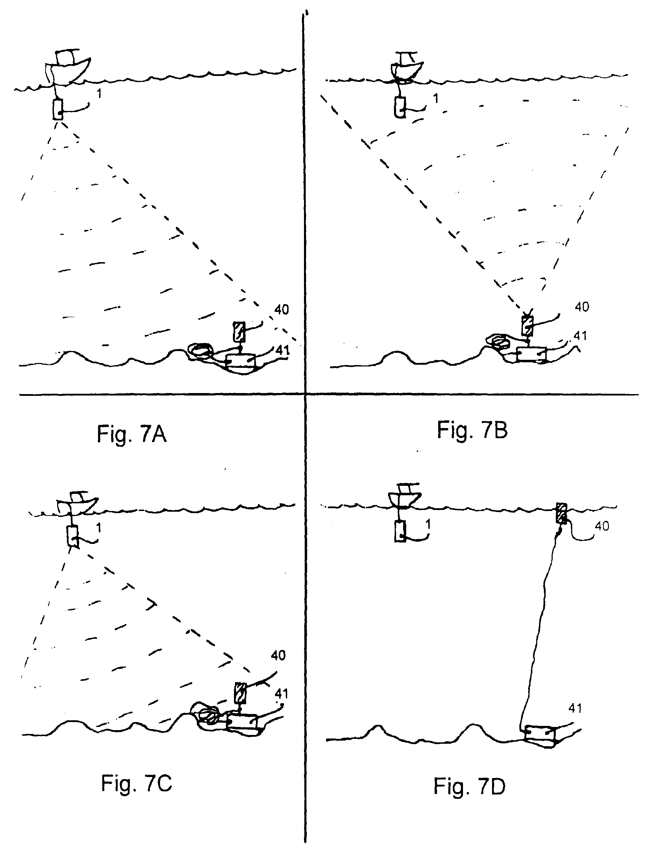

Figure 7a illustrates an application of the communication system. A transceiver device is placed on the surface, for instance on a boat. A further transceiver device is associated to a unhooking device 40.

A weight 41 holds the unhooking device 40 with the transceiver unit on the seabed.

In Figure 7b, the transcevier device on the seabed has received a seek code, memorises it and re-transmits it to device on the surface.

In Figure 7c, the surface device has received the signal transmitted from the device and the seabed and recognising it, it sends a lift command to the device on the seabed.

In Figure 7d, the transceiver device on the seabed has received the lift command, that has sent to the actuator 40 as an unhooking command, unhooking it from the weight 41.

This way, both the transceiver unit and the actuator lift to the surface, carrying a rope with which you can recover the weight.

This example is not to be intended as limitative for the application of the invention The system may be used also to send information or communication between two units. Furthermore, the ideas used do not limit the use of the system to the case when it is submerged in a liquid, but also allow to use it in air.

A further convenient characteristic is in the fact that the transmission and reception of the signals can happn even between more rice-transmitting units pre-configured, without requiring transmission protocols in multifrequency or other multi-channel systems.

Naturally, the invention is not limited to what has been described and shown, but can be widely changed, mostly in the constructive aspects.

So, for instance, the transceiving units can transform the signal recevied in pulses displayable, so to give luminous information or with chars in code for a diver kept in contact with the boat that has the surface trasceiver.

All of the integrated circuits used are of known kind and with commercial characteristics, so the devices are extremely reliable and have a low cost.

All of this without leaving the informator principle said above and in the following claimed.

## Claims

1. An improvement in the underwater communication systems by means of coded pulses emitted by a surface transmitter connected to a piezoelectric transducer (1) and received by a plunged receiver, connected to a second piezoelectric transducer (1), characterised in that it comprises the stages of reception and transmission use a single transmission frequency with discontinuous digital pulses, in the absence of a continuous transmission acting as a signal carrier frequency.

2. An improvement according to claim 1, characterised in that it comprises means (8) for the transformation of the signals in the form of bit, where the low bit value is associated with the absence of signal and the high value with the presence of signal.

3. An improvement according to claim claims 1 and 2, characterised in that it comprises timer devices to generate a ratio between the transmission time and the pause so that in a full clock time a 10% of the time is dedicated to the transmission of the signal, and the remaining 90% is dedicated to a pause.

4. An improvement according to one or more of the foregoing claims characterised in that the digitalized and coded data or commands are sent in a transmission frame always accompanied by the key-code, that is pre-programmed both in the receiver and the transmitter

5. An improvement according to one or more of the foregoing claims characterised in that the transmission pulses transmitted to the piezoelectric transducer (1) are generated by a shift register preprogrammed with the established key in binary code and of a number of code bit variable, the frame being made of the key and the code.

6. An improvement according to one or more of the foregoing claims, characterised in that the first transmitted frame does not contain any information on the communication of data, but acts as a signal to start the oscillator (12) that drives the piezoelectric trasducer.

7. An improvement according to claim 6, characterised in that the first frame is compressed in the number of bit in it contained, from a minumum of 2 bit to 4 bit at high level.

8. An improvement according to one or more of the foregoing claims, characterised in that the receiving unit has amplifier means (7) and means to lengthen the received pulse that drive the clock generator wit a delay of about 45% on the time between two consecutive pulses.

9. An improvement according to one or more of the foregoing claims, characterised in that the command pulses of the clock generator (14) are input in a shift register (16) with serial input and a parallel output, operating in open gate mode and preprogrammed with the same key of the transmitter, so that the code bit are decoded.

10. IMPROVEMENT as in one or more of the preceding claims characterised by the fact that in the frame from 1 to n bit are the key and the code bit can be multiple in the same frame

11. An improvement according to one or more of the foregoing claims, characterised in that in the same frame from 1 to n bit of code are sent, carrying from 1 to n number of data.

12. An improvement according to one or more of the foregoing claims, characterised in that one or more transmitting and/or receiving and/or transceiving units can communicate interactively.

13. An improvement according to one or more of the foregoing claims, characterised in that a transmission unit that generates three different signals is present: a generator for the signal frequency at a chosen frequency, a pulse transmission signal (14) for instance of chosen length and an interval generator of chosen duration between the pulses.

14. An improvement according to one or more of the foregoing claims, characterised in that it includes a transmission frequency of the piezoelectric transducer that can be, but not necessarily is, the resonance frequency of the transducer while the tuning of the receiver is made placing a signal amplifier (7) on the output of the receiver's piezoelectric transducer, that is selective for the transmission frequency, a so-called matched amplifier.

15. An improvement according to one or more of the foregoing claims, characterised in that the receiver and transmitter units are integrated in a transceiver device that uses the common componetns (1), (12), (14), integrating only the different stages for the execution of the different functions and having switches (A, B, C, D) to alternatively connect such stages to execute the different functions.

16. An improvement according to claim 15, characterised in that such switches (A, B, C,D) can be activated both manually or automatically following pre-programmed reception/transmission cycles or can be activated automatically upon the reception of a first frame with opportune activation codes for the switches themselves, for the receiving function of the transceiver unit that receives the transmission from another unit.

17. An improvement according to one or more of the foregoing claims, characterised in that the transceiver unit comprises a delay circuit (115A, 115B, 114) for the activation of the clock (14) relatively to the first frame received.
